# EUROPÄISCHE PATENTANMELDUNG

(11) **EP 3 181 972 A1**
(43) Veröffentlichungstag der Anmeldung: **21.06.2017**
(21) Anmeldenummer: 16203931.7
(22) Anmeldetag: 14.12.2016
(51) Int. Cl.: F16L 19/025

(54) **SCHRAUBKUPPLUNG ZUM LÖSBAREN VERBINDEN VON HOCHDRUCKHYDRAULIKLEITUNGEN**

(30) Priorität: 16.12.2015 DE 102015121985
(71) Anmelder: U.M. Gewerbeimmobilien GmbH & Co. KG, 58791 Werdohl (DE)
(72) Erfinder: SCHMITT, Frank, 58540 Meinerzhagen (DE); WEILANG, Georg, 58540 Meinerzhagen (DE)
(74) Vertreter: Buse, Mentzel, Ludewig Patentanwaltskanzlei

(57) **Zusammenfassung**

Die Erfindung bezieht sich auf eine Schraubkupplung zum lösbaren Verbinden von Hydraulikleitungen, insbesondere von Hochdruckhydraulikschläuchen. Die Schraubkupplung umfasst zwei Kupplungselemente (20, 30), die jeweils mit einer Hydraulikleitung verbunden werden können. Zur fluiddichten Verbindung dieser Kupplungselemente (20, 30) der Schraubkupplung ist an einem Kupplungselement (20) ein Außengewinde (22) vorgesehen, welches mit einem Innengewinde (42) einer Überwurfmutter (40) zusammenwirkt, die am anderen Kupplungselement (30) beweglich gelagert ist. Des Weiteren sind an den Kupplungselementen (20, 30) adäquate konische Flächen vorgesehen. Am Kupplungselement (30) ist eine senkrecht zur axialen Einsteckrichtung ausgerichtete Abstützfläche am Außenumfang in einem vorgegebenen Abstand zur Stirnfläche vorgesehen, so dass sich nach dem manuellen Verschrauben der Kupplungselemente (20, 30) in der Vormontagestellung ein definierter Ringspalt (11) ergibt (Fig. 2a).

## Beschreibung

Die Erfindung bezieht sich auf eine Schraubkupplung zum lösbaren Verbinden von Hydraulikleitungen, insbesondere von Hochdruckhydraulikschläuchen. Die Schraubkupplung umfasst zwei Kupplungselemente, die jeweils mit einer Hydraulikleitung verbunden werden können. Zur fluiddichten Verbindung dieser Kupplungselemente der Schraubkupplung ist an einem Kupplungselement ein Außengewinde vorgesehen, welches mit einem Innengewinde einer Überwurfmutter zusammenwirkt, die am anderen Kupplungselement beweglich gelagert ist.

An eine fluiddichte Schraubkupplung werden hinsichtlich der mechanischen und thermischen Eigenschaften hohe Ansprüche gestellt. Solche Schraubkupplungen werden bei Betriebsdrücken von bis zu 630 Bar bei vierfacher Sicherheit eingesetzt. Um den auftretenden Belastungen bei der Verwendung der Schraubkupplung für Hochdruckhydraulikleitungen, nämlich den hohen Zugkräften, Druckkräften, Biegekräften und Torsionskräften standhalten zu können, werden solche Schraubkupplungen insbesondere aus Stahlwerkstoffen hergestellt.

Eine bekannte Schraubkupplung zum lösbaren Verbinden von Hochdruckhydraulikleitungen mit zwei Kupplungsteilen zeigt beispielsweise das Dokument EP 2 557 346 A1. Eine solche Schraubkupplung 10' ist auch in den Figuren 4 und 5 gezeigt und umfasst ein Kupplungselement 30', welches einen Ansatz mit einem Außenkonus 38 besitzt. Dieser Außenkonus 38 ist in seiner Form und in seinen Maßen an die Kontur eines Innenkonus 24 in einer Aufnahme des zweiten Kupplungselementes angepasst, welches nachfolgend als Anschlusselement 20 bezeichnet werden soll. Die konischen Flächen des Innenkonus 24 des Anschlusselements 20 und des Außenkonus 38 des Kupplungselements 30' besitzen glatte Oberflächen, wodurch die metallischen Kupplungselemente 20, 30' ohne zusätzliche Dichtung gegeneinander abdichten können, wenn sie durch eine Schraubverbindung mittels der Überwurfmutter 40 aneinandergepresst werden und somit das Einsteckende des Kupplungselementes 30' mit dem Außenkonus 38 formschlüssig im Innenkonus 24 des Anschlusselementes 20 aufgenommen wird und die adäquaten konusförmigen Dichtflächen aufeinanderliegen. Um diese beiden Kupplungsteile mittels der Überwurfmutter fluiddicht zu verbinden, wird die Überwurfmutter von Hand bis zu einem Punkt des deutlich spürbaren Kraftanstiegs angezogen und bei einem vorgegebenen Drehmoment über den Punkt des deutlich spürbaren Kraftanstiegs festgezogen. Eine dauerhafte Abdichtung wird erzielt, wenn die bei der Schraubverbindung aufgebrachte Vorspannkraft erhalten bleibt, d.h. der Außenkonus 38 des Kupplungselementes 30' sich im Innenkonus 24 des Anschlusselementes 20 gesetzt hat. Da bei der bekannten Schlauchkupplung 10'nur der Innendurchmesser und das Winkelmaß der Konusflächen normiert ist, ergeben sich bei der Verbindung der Elemente 20, 30' unterschiedlich lange Ringspalte 11' zwischen den Stirnflächen des Anschlusselements 20 und dem Kupplungselement 30', die ein Anziehen der Überwurfmutter 40 über das gewünschte Maß hinaus erlauben. Ein solches Überdrehen der Überwurfmutter 40 führt dazu, dass der Außenkonus 38 des Kupplungselements 30' den Innenkonus 24 des anderen Kupplungselements 20 auseinanderdrückt und aufspreizt. Erfolgt eine solche Verformung über die Streckgrenze hinaus, so bleibt diese Verformung erhalten. In der Folge ist nur ein erschwertes Lösen der geschädigten Verbindung möglich. Das Lösen der Verbindung führt zu weiteren Schädigungen an den Kupplungselementen. Ein technisch einwandfreier Austausch ist nicht gewährleistet. Eine erneute Verbindung der Elemente der Schraubkupplung, auch bei Austausch einer der Komponenten, führt in der Regel zu keiner sicheren Verbindung und kann mit hoher Wahrscheinlichkeit zu Undichtigkeiten führen. Die zur sicheren Verbindung notwendige Vorspannung in der Gewindeverbindung kann bei einer solchen Schraubkupplung durch weiteres Setzverhalten unter dynamischer Last aufgehoben werden.

Bei Schraubkupplungen für Schlauchhydraulikleitungen werden aus Sicherheitsgründen die Schläuche gemäß ZH 1/74 der Berufsgenossenschaft spätestens nach 6 Jahren ausgetauscht, wozu die Schraubkupplung gelöst werden muss. Besitzt eine solche Schraubkupplung bereits einen aufgespreizten Innenkonus bzw. einen geschädigten Dichtkegel, wird in der Regel keine sicher dichtende Verbindung mehr erzielt.

Darüber hinaus kann bei einer bekannten Schraubkupplung durch unsachgemäßes Anziehen der Überwurfmutter und beim Einsatz der Schraubkupplung ein Zustand erreicht werden, wo die zuerst erzielte notwendige Vorspannung nicht mehr vorliegt. In einem solchen Fall führt die Schädigung der Schraubkupplung dazu, dass sich die Verbindung lockert und in Folge undicht wird.

Darüber hinaus wird in dem Dokument EP 2 557 346 A1 der Einfluss der Oberfläche der Kupplungselemente für das Erreichen einer fluiddichten Verbindung beschrieben.

Probleme können des Weiteren bei Schraubkupplungen auftreten, deren Kupplungsteile aus Materialien unterschiedlicher Zugfestigkeiten bestehen, beispielsweise ein Anschlusselement aus einem Stahlschmiedeteil, welches eine geringere Festigkeit aufweist und damit ein geringes Drehmoment verträgt und andererseits ein gedrehtes Kupplungselement aus Automatenstahl, welches eine höhere Zugfestigkeit zeigt. Bei einer solchen Schlauchkupplung können nicht die gleichen Drehmomente vorgegeben werden wie bei einer Schlauchkupplung aus zwei Kupplungsteilen aus Automatenstahl. Der Grad einer möglichen Verformung bestimmt sich durch die Festigkeitseigenschaften der gepaarten Kupplungselemente in Abhängigkeit vom Anzugsmoment. Dies ist in der Anwendung für den Nutzer nachteilig.

Aufgabe der vorliegenden Erfindung ist es daher, eine Schraubkupplung zum lösbaren Verbinden von Hochdruckhydraulikleitungen zur Verfügung zu stellen, die eine sichere fluiddichte Verbindung für Kupplungselemente aus unterschiedlichen Werkstoffen erzielt und für den Nutzer einfach und sicher anwendbar ist.

Diese Aufgabe wird mit einer Schraubkupplung mit den Merkmalen des Anspruchs 1 gelöst. Eine solche erfindungsgemäße Schraubkupplung besteht aus zwei Kupplungselementen. Der besseren Übersicht halber wird das eine Kupplungselement als Anschlusselement bezeichnet. Ein oder beide Kupplungselemente sind direkt oder aber indirekt über einen zusätzliches Verbindungsteil mit einer Hochdruckhydraulikleitung oder einem Anschluss verbindbar. Beispielsweise kann das Kupplungselement an seinem einen Ende, dem Schlauchende, einen Schlauchnippel besitzen, an dem ein Hochdruckhydraulikschlauch mittels einer radial aufgepressten Pressfassung befestigt wird. Das Anschlusselement kann ebenfalls einen Schlauchnippel besitzen oder als Verbindungselement zu einem weiteren Kupplungselement oder Hydraulikanschluss dienen. Zur Verbindung mit dem Anschlusselement besitzt das Kupplungselement an seinem Einsteckende einen Ansatz mit einem Außenkonus. Mit diesem Ansatz wird das Kupplungselement in bekannter Weise in das Anschlusselement eingesteckt. Das Anschlusselement besitzt hierfür in einem Gewindezapfen eine Aufnahme mit einem Innenkonus. Die konischen Flächen des Innenkonus besitzen eine Winkelform adäquat zu den konischen Flächen des Außenkonus des Kupplungselements. Des Weiteren ist an dem Kupplungselement eine Überwurfmutter beweglich gehaltert. Die Überwurfmutter weist ein Innengewinde auf. Für die Verbindung des Kupplungselementes mit dem Anschlusselement besitzt das Anschlusselement an seiner Außenseite ein Außengewinde auf, welches mit dem Innengewinde der Überwurfmutter zusammenwirkt.

Zum Verbinden des Kupplungselements mit dem Anschlusselement wird der konusförmige Ansatz des Kupplungselements in die konusförmige Aufnahme des Anschlussteiles eingesteckt und die Überwurfmutter von Hand festgezogen. Das Festziehen mit der Hand ist bis zu einem Punkt des deutlich spürbaren Kraftanstiegs möglich. Die Schraubkupplung befindet sich dann in der Vormontagestellung. Eine Verschraubung über den Anzugspunkt ist von Hand nicht mehr möglich. Jedoch kann mittels eines Werkzeuges die Überwurfmutter weiter angezogen werden, da sich in der Vormontagestellung ein Ringspalt zwischen der Stirnfläche des Anschlusselements und einer im axialen Abstand zu dieser Stirnfläche vorgesehenen Abstützfläche am Kupplungselement besteht. Diese Abstützfläche verläuft senkrecht zur Einsteckrichtung und ist vorzugsweise an einer Anschlagschulter des Kupplungselementes vorgesehen, so dass die Abstützfläche einen Ringbund am Außenumfang des Kupplungselements bildet. Durch die Abstützfläche am Kupplungselement wird die mögliche Anzugsstrecke bei einer Verbindung mit einem Anschlusselement begrenzt. Der Ringspalt in der Vormontagestellung hat in axialer Richtung, d.h. in Einsteckrichtung, eine definierte Spaltlänge. Die Stirnfläche des Anschlusselementes ist also in der Vormontagestellung in einem definierten Abstand von der Abstützfläche des Kupplungselementes. Der Ringspalt ist einerseits so dimensioniert, dass in der Endmontagestellung das Anschlusselement mit seiner Stirnfläche an der Abstützfläche des Kupplungselements anliegt. Eine solche Anlage erfolgt, bevor ein Aufspreizen des Innenkonus möglich ist. Durch den definierten Ringspalt in der Vormontagestellung wird somit ein Aufspreizen des Innenkonus verhindert. Der Ringspalt ist andererseits so dimensioniert, dass ein vorgegebenes Drehmoment nicht unterschritten wird, d.h. die Schraubkupplung in der Endmontagestellung unter Vorspannung steht.

Dieser definierte Ringspalt wird erhalten, wenn die Abstützfläche am Kupplungselement in einem vorgegebenen Abstand zur Stirnfläche des Kupplungselements vorgesehen ist.

Der Ringspalt mit der optimalen axialen Spaltlänge in der Vormontageposition ist von mehreren Parametern abhängig, einerseits von der Steigung des Gewindes der Schraubverbindung, andererseits von möglichen Toleranzen der beiden Kupplungselemente. Darüber hinaus sind Werkstoffeigenschaften und Oberflächeneigenschaften der im Eingriff befindlichen Flächen zu berücksichtigen. Es hat sich gezeigt, dass ein Ringspalt mit einer axialen Spaltlänge L1, welche wie folgt definiert ist
L1 = 0,1 mm bis 0,5 mm
zu dem gewünschten Ergebnis führt. Die vorgegebene Spaltlänge L1 berücksichtigt die Toleranzen in den Maßen der Elemente der Schlauchkupplung, wie auch Werkstoff- und Oberflächeneigenschaften dieser Elemente.

Wird nun die Schlauchkupplung aus der Vormontagestellung, wo der definierte Ringspalt zwischen der Abstützfläche am Kupplungselement und der Stirnfläche des Anschlusselements besteht, durch weiteres Anziehen der Überwurfmutter über den Punkt des deutlich spürbaren Kraftanstiegs hinaus in die Endmontagestellung überführt, so wird die Endmontagestellung erreicht, wenn die Stirnfläche des Anschlusselements an der Abstützfläche am Kupplungselement anschlägt und mit einem vordefinierten Anzugsmoment verschraubt worden ist. Dadurch ist mit einem definierten Drehmoment eine für die auftretenden statischen und dynamischen Belastungen der Schraubkupplung sichere Vorspannung im Verbindungsgewinde erzielt.

Aufgrund der axialen Abstützung der Stirnflächen des Anschlusselements an der Abstützfläche des Kupplungselements wird sicher verhindert, dass sich der Innenkonus zu weit in den Außenkonus einschiebt und zu einem Aufweiten des Außenkonus führt. Andererseits wird an dieser Abstützfläche eine metallische Abdichtung sichergestellt. Bekanntlich müssen Hydraulikschläuche in regelmäßigen Abständen ausgetauscht werden, d.h. eine solche Schraubkupplung muss in regelmäßigen Abständen gelöst werden. Eine sichere Abdichtung wird danach auch zwischen einem erfindungsgemäß ausgestalteten Kupplungselement und einem bereits verwendeten Anschlusselement mit einem geweiteten Außenkonus erzielt.

Die Dichtfläche dieser metallischen Dichtung an der ringbundartigen Abstützfläche ist dabei wesentlich kleiner als die Dichtfläche bei den bisherigen Schraubkupplungen, wo die Dichtflächen durch die konischen Flächen des Innenkonus und des Außenkonus gegeben waren. Damit ist einerseits der Einfluss von Toleranzen im Bereich der ringbundartigen Dichtfläche gegenüber den Konusflächen reduziert. Andererseits wird bei einer geringeren Dichtfläche eine vergleichsweise höhere Flächenpressung beim Verbinden erzielt.

Des Weiteren ist der Einfluss von Zugfestigkeiten der Kupplungs- bzw. Anschlusselemente der Schlauchkupplung ist wesentlich kleiner. Für die neue Schraubkupplung können demzufolge Kupplungs- bzw. Anschlusselemente aus unterschiedlichen Stahlmaterialien, d.h. Materialien unterschiedlicher Zugfestigkeiten problemlos eingesetzt werden.

Aufgrund der sicheren Abstützung an der Abstützfläche bleibt die Vorspannung der Schraubkupplung erhalten. Das Anschlusselement ist beim Verbinden sozusagen am Kupplungselement auf Block gefahren.

Wie bereits erwähnt, gewährleistet die Abstützfläche in der Endmontagestellung zusammen mit den Stirnflächen des Anschlusselements eine metallische Abdichtung. Bei der vorliegenden Schraubkupplung ist es daher nicht mehr unbedingt notwendig, dass der Innenkonus des Anschlusselementes formschlüssig am Außenkonus des Kupplungselementes anliegt. Bei einem optimal dimensionierten Spalt werden gleichwohl der Außenkonus des Kupplungselements und der Innenkonus des Anschlusselementes in einem Übergangssitz vorliegen, dies bedeutet ohne Abstand aneinander liegen.

In vorteilhafter Weise wird das Verbinden des Kupplungselements mit dem Anschlusselement zu einer solchen erfindungsgemäßen Schraubkupplung wesentlich vereinfacht. Nachdem die Überwurfmutter von Hand angezogen wurde, kann ohne Vorgabe eines Drehmoments das weitere Anziehen der Überwurfmutter erfolgen, nämlich bis zur Blocksicherung, wo das Anschlusselement mit seiner Stirnfläche an der Abstützfläche des Kupplungselements anliegt und kein Ringspalt mehr vorhanden ist, wodurch ein extremer Kraftanstieg spürbar wird und den Eingriff der Blocksicherung anzeigt. Durch Aufbringen eines vorgegebenen maximalen Anzugsmomentes wird in Folge die Endmontagestellung mit der notwendigen Vorspannung erreicht.

Die Erfindung wird nachfolgend an einem Ausführungsbeispiel erläutert. Die Zeichnung zeigt:
- Fig. 1: einen Teilschnitt durch die Einzelteile einer erfindungsgemäßen Schraubkupplung,
- Fig. 2a: diese Schraubkupplung in der Vormontagestellung,
- Fig. 2b: ein vergrößerter Ausschnitt von Fig. 2a,
- Fig. 3a: diese Schraubkupplung in der Endmontagestellung,
- Fig. 3b: ein vergrößerter Ausschnitt von Fig. 3a,
- Fig. 4: eine Schraubkupplung gemäß dem Stand der Technik in der Vormontagestellung,
- Fig. 5: eine Schraubkupplung gemäß dem Stand der Technik in einer Endmontagestellung.

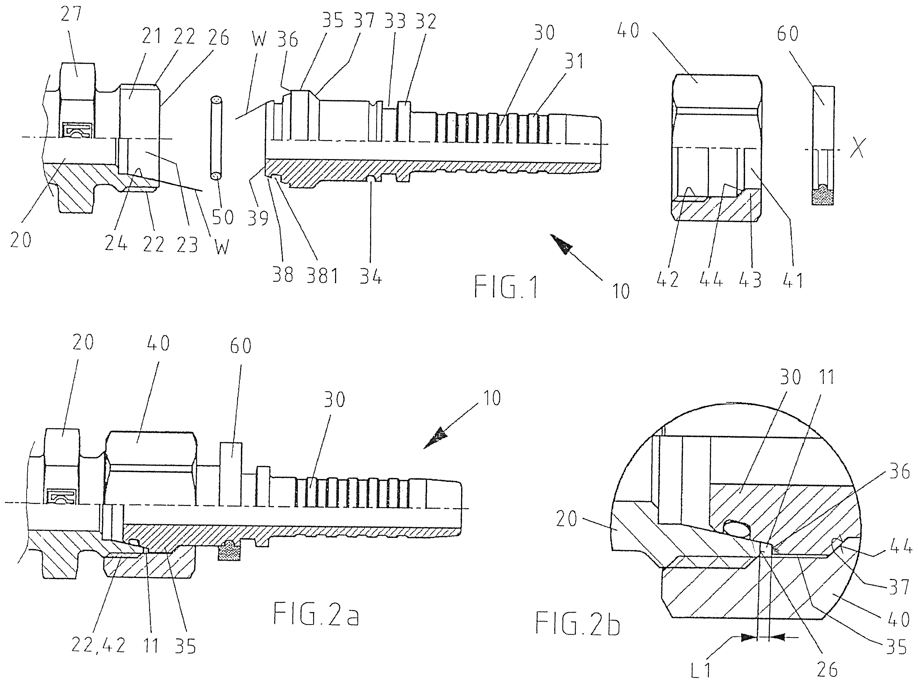

In der Fig. 1 sind die einzelnen Elemente einer erfindungsgemäßen Schraubkupplung 10 zu sehen. Diese Schraubkupplung 10 besteht aus zwei rohrförmigen Kupplungselementen, nämlich dem Kupplungselement 30 und dem Anschlusselement 20, welche mittels der Überwurfmutter 40 verbindbar sind. In diesem Beispiel kann an dem Kupplungselement 30 ein Hochdruckhydraulikschlauch angeschlossen werden. Dazu besitzt das Kupplungselement 30 an seinem einen Ende in bekannter Weise einen Schlauchnippel 31. Dieser Schlauchnippel 31 weist Rippen zur Aufnahme eines Hochdruckschlauchs auf, der mittels einer aufpressbaren Pressfassung, welche unter radialem Druck auf den Schlauch und Schlauchnippel 31 aufgepresst wird, gehalten werden kann. Hierbei bildet die Schulter 32 einen Anschlagflansch zur Begrenzung der Bewegung des Hochdruckschlauchs beim Aufschieben auf das Kupplungselement 30 und die benachbart zu dieser Schulter 32 vorgesehene Umfangsnut 33 dient zum positionierenden Eingreifen der Pressfassung. Der Schlauch und die Pressfassung sind in den Figuren nicht gezeigt. Das Kupplungselement 30 besitzt des Weiteren am Außenumfang eine Ringnut 34, in der ein Spannring 60 gehalten werden kann. Dieser Spannring 60 verhindert, dass nach dem Aufschieben die am Kupplungselement 30 beweglich gelagerte Überwurfmutter 40 vom Kupplungselement 30 herunterrutscht. Die Überwurfmutter 40 besitzt an einer Seite einen ringförmigen Bund 43 mit welchem sie an einer Anschlagschulter 35 des Kupplungselementes 30 anschlägt. In diesem Fall sind die beiden Anlageflächen 44 und 37 konisch ausgebildet. Auf der zum Einsteckende weisenden Seite der Anschlagschulter 35 ist eine senkrecht zur Einsteckrichtung X ausgerichtete Abstützfläche 36 vorgesehen. Am Einsteckende des Kupplungselement 30 ist ein Ansatz mit einem Außenkonus 38 vorgesehen. In diesem Fall mit einem Winkelmaß W von 24°. Es sind auch andere genormte Winkelmaße W beispielsweise von 60° oder bei Sonderanfertigungen auch abweichende Winkelmaße W denkbar. Das Anschlusselement 20 muss für ein solches Kupplungselement 30 an seinem Gewindezapfen 21 eine passende Aufnahme 23 mit einem Innenkonus 24 mit gleichem Winkelmaß W aufweisen. An der Außenseite des Gewindezapfens 21 des Anschlusselements 20 ist ein Außengewinde 22 vorgesehen, auf welches bei der Montage die am Kupplungselement 30 gehalterte Überwurfmutter 40 aufgeschraubt wird. Das Anschlusselement 20 ist in diesem Beispiel nicht vollständig gezeigt. An der linken Seite von Sechskant 27 kann in gleicher Weise ein Gewindezapfen zur Verbindung mit einem weiteren Kupplungselement vorgesehen sein. Das gezeigte Anschlusselement 20 kann aber auch Teil eines Gerätes, einer Maschine oder eines mit Schlauchnippel versehenen Kupplungselementes sein.

Die Verbindung des Kupplungselements 30 mit dem Anschlusselement 20 wird nachfolgend beschrieben und in den Figuren gezeigt, hierbei ohne dass das Kupplungselement 30 mit einem Schlauch verbunden ist. Es wird die Stirnseite 39 des Kupplungselements 30 in die Aufnahme 23 des Anschlusselements 20 und nachfolgend der Außenkonus 38 in den Innenkonus 24 eingesetzt, so dass die konusförmigen Flächen aneinander liegen. Mit der Hand wird dann die Überwurfmutter 40 auf das Anschlusselement 20 aufgeschraubt und zwar bis zu einem Anzugspunkt, wo ein deutlicher Kraftanstieg spürbar wird. Dann befindet sich die Schraubkupplung 10 in der Vormontagestellung, gezeigt in Fig. 2a bzw. 2b. Die Überwurfmutter 40 liegt mit ihrem ringförmigen Bund an der Anschlagschulter 35 des Kupplungselements an und ist über das Innengewinde 42 mit dem Außengewinde 22 des Anschlusselements 20 verbunden. Zwischen dem Anschlusselement 20 und dem Kupplungselement 30 verbleibt ein Ringspalt 11, der eine axiale Länge L1 hat, wie besser aus Fig. 2b zu ersehen ist. Die Stirnfläche 26 des Anschlusselements 20 befindet sich in einem Abstand L1 von der senkrecht zur axialen Einsteckrichtung X ausgerichteten Abstützfläche 36 an der Anschlagschulter 35 des Kupplungselements 30. Mit der Spaltlänge L1 von 0,1 bis 0,5 mm des Ringspalts 11 und dem vordefinierten Anzugsmoment ist das gewünschte Endmontageergebnis erzielbar.

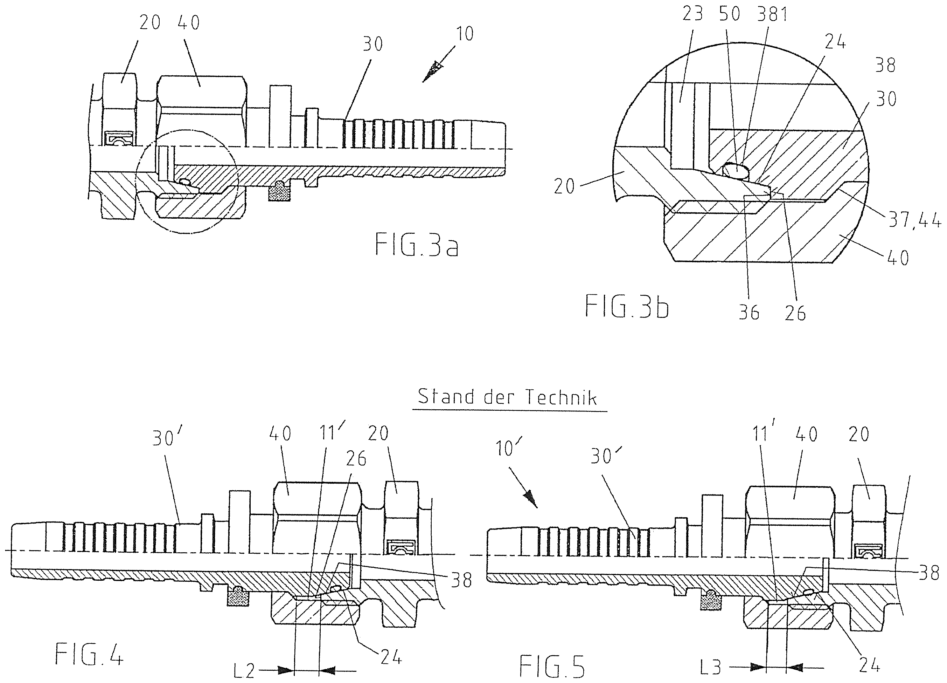

Wird nämlich die Überwurfmutter 40 weiter angezogen, d.h. mittels eines Werkzeugs über diesen Anzugspunkt hinaus, wird dann die Endmontagestellung erzielt, welche in Fig. 3a und 3b gezeigt ist, wenn die Stirnfläche 26 des Anschlusselements 20 an der Abstützfläche 36 des Kupplungselements 30 anliegt und ein metallischer Formschluss erzielt ist. Zusätzlich kann vorgesehen werden, dass die Abstützfläche 36 nach außen in einem Winkel ausläuft, der insbesondere in Abhängigkeit von der Nennweite bestimmt wird, so dass sich beim Anziehen die Stirnfläche 26 keilförmig in die Abstützfläche 36 presst.

Bei der vorliegenden Schlauchkupplung 10 bestehen beide Elemente 20, 30 aus metallischem Material, nämlich in diesem Beispiel aus Automatenstahl. Es liegt eine metallische Dichtung im Bereich der Abstützfläche 36 vor. Ein weitergehendes Anziehen der Überwurfmutter 40 ist nicht möglich, d.h. der Ansatz des Kupplungselements 30 mit dem Außenkonus 38 kann nicht weiter in die Aufnahme 23 des Anschlusselements 20 eingeschoben werden. Durch diese Blocksicherung wird also ein Aufweiten des Innenkonus 24 vom Anschlusselement 20 verhindert.

Anders ist dies beim Stand der Technik, wo in der Vormontagestellung, gezeigt in Fig. 4, zwischen dem Kupplungselement 20 und dem Kupplungselement 30' sich ein Ringsspalt 11' mit einer axialen Länge L2 ergibt. Um bei einer solchen Schlauchkupplung 10' eine Endmontagestellung zu erreichen, wird für den Nutzer der Schraubkupplung ein Drehmoment vorgegeben und ein Anziehen der Überwurfmutter 40 entsprechend dieser Vorgabe vorgenommen und beispielsweise eine Endmontagestellung, gezeigt in Fig. 5, erzielt. Hier ist ein Ringspalt 11' mit einer entsprechend verringerten axialen Länge L3 zu sehen. Es wird deutlich, dass die Überwurfmutter 40 auch über diese gezeigte Endmontagestellung hinaus angezogen werden kann, wodurch der Außenkonus 38 des Kupplungselements 30' sich so weit in den Innenkonus 26 des Kupplungselements 20 schiebt, dass es zu einer unerwünschten Aufweitung des Innenkonus 26 kommen und was bei einer erneuten Verbindung beider Kupplungselemente 20, 30' zu Leckagen führen kann.

Die Flächen des Außenkonus 38 und des Innenkonus 24 der neuen Schraubkupplung 10 liegen in den meisten Fällen aneinander an, vorzugsweise in einem Übergangssitz. Da beide Elemente 20, 30 Toleranzen aufweisen können, wird bei einer bevorzugten Ausführungsform zusätzlich eine Ringnut 381 am Außenkonus 38 zur Aufnahme einer Weichdichtung 50 vorgesehen. Eine solche ringförmige Weichdichtung 50 wird auch bei bekannten Schraubkupplungen 10', gezeigt in Fig. 5, verwendet. Bei Anwendung dieser Schraubkupplung 10' sitzt ein Schlauch auf dem Schlauchnippel des Kupplungselements 30'. Insbesondere impulsartige Schlauchbewegungen führen bei einer solchen Schraubkupplung 10' zu hebelartigen Belastungen des Konusbereichs, da aufgrund des Spalts 11' ein geringes Spiel innerhalb der Schraubkupplung 10' vorhanden ist. Derartige Belastungen sind ein Leckagerisiko, da die Gewindevorspannung verloren gehen kann. Darüber hinaus wird bei diesen hebelartigen Belastungen die Weichdichtung bewegt und wandert aus der Ringnut in den Bereich zwischen den Konusflächen, wo sie gequetscht wird und ein Abrieb erfolgt. Eine solche abgeruppelte Weichdichtung verliert mit der Zeit ihre Wirkung. Des Weiteren kann die metallische Dichtfunktion unter hebelartigen Belastungen aufgehoben werden.

Bei der erfindungsgemäßen Schraubkupplung 10 ist eine axiale Bewegung der Weichdichtung 50 begrenzt, da kein Spalt in der Endmontagestellung vorhanden ist. Dynamische Belastungen durch Schlauchbewegungen werden durch die Blocksicherung zusätzlich aufgefangen und dadurch der konische Bereich entlastet. Diese Biegewechsellasten führen nicht zu einer Veränderung der Vorspannung. Die Vorspannung bleibt auch bei derartigen Belastungen erhalten. Die metallische Dichtung im Bereich der ringbundartigen Abstützfläche 36 bleibt bei hoher Flächenpressung erhalten und gewährleistet eine bis zu vierfache Sicherheit bei den Druckwerten eines Hydraulikschlauchs. Bei statischer Druckprüfung konnte eine Dichtheit bei mehr als 1800 bar gemessen werden.

Die neue Schraubkupplung 10 besitzt mehrere Vorteile, nämlich die dauerhafte Dichtheit, ohne dass ein Nachziehen der Verschraubung notwendig wird. Es ist ausgeschlossen, dass der Bereich des Anschlusselements 20 mit dem Innenkonus 24 aufgespreizt wird. Die Dichtheit ist auch bei wiederholter Montage durch die metallische Abdichtung im Bereich der ringbundartigen Abstützfläche 36 , der Blocksicherung, reproduzierbar gesichert und dies auch bei Verwendung eines Anschlusselementes mit aufgeweiteten Innenkonus. Die Schraubkupplung 10 gewährleistet ein hohes Sicherheitsniveau auch bei extremen dynamischen Belastungen. Die für eine sichere und leckagefreie Verbindung notwendige Vorspannung der Schraubverbindung ist dauerhaft gewährleistet. Es gibt keine Probleme bei der Verbindung von Kupplungselementen 30 und Anschlusselementen 20 aus Material mit unterschiedlichen Zugfestigkeiten.

### Bezugszeichen

- 10: Armatur für Schlauchkupplung
- 10': Armatur für Schlauchkupplung gemäß Stand der Technik
- 11: Spalt
- 11': Spalt bei 10'
- 20: Anschlusselement
- 21: Gewindezapfen
- 22: Außengewinde
- 23: Aufnahme für 30
- 24: Innenkonus
- 26: Stirnfläche
- 27: Sechskant
- 30: Kupplungselement
- 30': Kupplungselement gemäß Stand der Technik
- 31: Schlauchnippel mit Rippen
- 32: Schulter
- 33: Umfangsnut für Pressfassung
- 34: Ringnut für 60
- 35: Anschlagschulter
- 36: Abstützfläche
- 37: konische Anlagefläche für 40
- 38: Außenkonus
- 381: Ringnut für 50
- 39: Stirnfläche
- 40: Überwurfmutter
- 41: Durchgangsöffnung
- 42: Innengewinde
- 43: ringförmige Bund
- 44: konische Anlagefläche
- 50: Dichtring, Weichdichtung
- 60: Spannring
- L1: Spaltlänge
- L2: Spaltlänge beim Stand der Technik
- L3: Spaltlänge beim Stand der Technik
- W: Winkelmaß
- X: Einsteckrichtung

## Patentansprüche

1. Schraubkupplung zum lösbaren Verbinden von Hochdruckhydraulikleitungen,
- mit einem rohrartigen Kupplungselement (30), mit einem Anschlusselement (20) und mit einer Überwurfmutter (40),
- wobei die Überwurfmutter (40) am Kupplungselement (30) bewegbar gelagert ist und ein Innengewinde (42) besitzt,
- wobei das Anschlusselement (20) einen Gewindezapfen (21) mit einem Außengewinde (22) sowie eine Aufnahme (23) mit einem Innenkonus (24) besitzt,
- wobei das Kupplungselement (30) an einem Ende, dem Einsteckende, an das Anschlusselement (20) anschließbar ist und hierzu einen Ansatz mit einem Außenkonus (38) besitzt, der adäquat zum Innenkonus (24) des Anschlusselementes (20) ausgebildet ist,
- wobei das Kupplungselement (30) und das Anschlusselement (20) mittels der Überwurfmutter (40) miteinander verbindbar sind und eine allein von Hand vorgenommene Verschraubung bis zu einem Anzugspunkt eines deutlich spürbaren Kraftanstiegs, der Vormontagestellung, erreichbar ist und
- wobei in der Endmontagestellung die Überwurfmutter (40) über diesen Anzugspunkt des deutlich spürbaren Kraftanstiegs hinaus festziehbar ist, so dass das Kupplungselement (30) mit dem Anschlusselement (20) unter Vorspannung und unter Ausbildung einer sicheren Abdichtung miteinander verbunden ist,
**dadurch gekennzeichnet, dass**
- das Kupplungselement (30) eine senkrecht zur axialen Einsteckrichtung (X) ausgerichtete Abstützfläche (36) am Außenumfang besitzt, welche in einem vorgegebenen Abstand zur Stirnfläche (39) des Kupplungselementes (30) vorgesehen ist und
- wobei dieser Abstand so groß ist, dass sich einerseits in der Vormontagestellung ein definierter Ringspalt (11) der axialen Länge (L1) zwischen der Abstützfläche (36) an der Anschlagschulter (35) und der Stirnfläche (25) des Anschlusselements (20) ergibt und andererseits in der Endmontagestellung sich die Stirnfläche (25) des Anschlusselements (20) an der Abstützfläche (36) dichtend abstützt.

2. Armatur nach Anspruch 1, **dadurch gekennzeichnet, dass** der Ringspalt (11) eine Länge (L1) von 0,1 mm bis 0,5 mm hat.

3. Armatur nach Anspruch 1 oder 2, **dadurch gekennzeichnet, dass** das Kupplungselement (30) eine radial nach außen weisende Anschlagschulter (35) mit einer Anlagefläche (37) für die Überwurfmutter (40) auf der eine Seite und mit der Abstützfläche (36) auf der zum Einsteckende weisenden Seite besitzt.

4. Armatur nach einem der Ansprüche 1 bis 3, **dadurch gekennzeichnet, dass** sich in der Endmontagestellung die konischen Flächen des Innenkonus (24) vom Anschlusselement (20) und des Außenkonus (38) vom Kupplungselement (30) in einem Übergangssitz befinden.

5. Armatur nach einem der Ansprüche 1 bis 4, **dadurch gekennzeichnet, dass** die konischen Flächen des Innenkonus (24) vom Anschlusselement (20) und des Außenkonus (38) vom Kupplungselement (30) ein standardisiertes Winkelmaß (W) besitzen, vorzugsweise 24° bzw. 60°.

6. Armatur nach einem der Ansprüche 1 bis 5, **dadurch gekennzeichnet, dass** am Außenkonus (38) vom Kupplungselement (30) zusätzlich eine Ringnut (381) für eine Weichdichtung (50) vorgesehen ist.

7. Armatur nach einem der Ansprüche 1 bis 6, **dadurch gekennzeichnet, dass** das Kupplungselement (30) an seinem dem Einsteckende gegenüberliegenden Ende, dem Schlauchende, einen Schlauchnippel (31) zur Aufnahme eines Hochdruckschlauchs und einer unter radialen Druck aufpressbaren Pressfassung aufweist.

8. Armatur nach einem der Ansprüche 1 bis 7, **dadurch gekennzeichnet, dass** das Kupplungselement (30) und das Anschlusselement (20) aus einem Stahlwerkstoff besteht, beispielsweise aus Schmiedestahl, aus einer Chrom-Molybdän-Stahllegierung oder aus Automatenstahl.

9. Armatur nach einem der Ansprüche 1 bis 8, **dadurch gekennzeichnet, dass** das Anschlusselement (20) an seinem dem Gewindezapfen gegenüberliegenden Ende einen Schlauchnippel (31) zur Aufnahme eines Hochdruckschlauchs und einer unter radialen Druck aufpressbaren Pressfassung aufweist.

10. Armatur nach einem der Ansprüche 1 bis 8, **dadurch gekennzeichnet, dass** das Anschlusselement (20) an seinem dem Gewindezapfen gegenüberliegenden Ende mindestens einen weiteren Gewindezapfen zur Verbindung mit einem weiteren Kupplungselement besitzt.
